# EUROPÄISCHE PATENTSCHRIFT

(11) **EP 3 326 796 B1**
(45) Veröffentlichungstag und Bekanntmachung des Hinweises auf die Patenterteilung: **24.04.2019**
(21) Anmeldenummer: 16201166.2
(22) Anmeldetag: 29.11.2016
(51) Int. Cl.: B31B 50/80, B31B 100/00, B31B 110/35, B31B 120/30, B65B 43/30

(54) **VORRICHTUNG ZUM ÜBERGEBEN VON FALTSCHACHTELN**
DEVICE FOR TRANSFERRING FOLDING BOXES
DISPOSITIF DE TRANSFERT DE BOÎTES PLIANTES

(43) Veröffentlichungstag der Anmeldung: 30.05.2018
(73) Patentinhaber: UHLMANN PAC-SYSTEME GmbH & Co. KG, 88471 Laupheim (DE)
(72) Erfinder: Zieher, Daniel, 88444 Ummendorf (DE); Rodi, Wolfgang, 88471 Laupheim / Baustetten (DE)
(74) Vertreter: Wächter, Jochen

(56) Entgegenhaltungen:
- EP-A1- 0 434 961
- EP-A1- 1 310 354
- US-A1- 2004 089 517

## Beschreibung

Die vorliegende Erfindung betrifft eine Vorrichtung zum Übergeben von Faltschachteln.

Derartige Vorrichtungen werden verwendet, um flache Zuschnitte von Faltschachteln, d.h. zugeschnittene, bereits gefaltete und unter Umständen verklebte oder zusammengesteckte Faltschachtelrohlinge, aus einem Magazin zu entnehmen und an ein geeignetes Transportmittel, beispielsweise in Fächer einer Förderkette, zu übergeben und während dieser Übergabe die flachen Zuschnitte der Faltschachteln aufzurichten. Anschließend kann die Befüllung der Faltschachteln mit den gewünschten Produkten erfolgen.

Ein Beispiel einer derartigen Vorrichtung zum Übergeben von Faltschachteln ist aus der US 4,518,301 bekannt. Die für den Transport zuständigen Sauger sind an Saugerarmen befestigt, welche wiederum drehbar an einem Planetenträger gelagert sind, der sich um eine horizontale Mittelachse dreht. Die Sauger entnehmen dabei einen Zuschnitt einer Faltschachtel aus einem Faltschachtelmagazin, drehen diesen während der Drehung des Planetenträgers zusätzlich um eine Lagerachse der Saugerarme nach unten und stoßen die Faltschachteln in eine Richtung entgegengesetzt der Förderrichtung einer Fördervorrichtung gegen feste Kulissen der Fördervorrichtung, wodurch die Faltschachteln aufgefaltet werden. Bei dieser Art des Aufrichtens der Faltschachteln wirken aufgrund der hohen Relativgeschwindigkeiten zwischen der Faltschachtel und der Fördervorrichtung zum Zeitpunkt des Auftreffens auf die feststehende Kulisse hohe Kräfte auf die Faltschachtel, so dass diese beschädigt bzw. verformt werden kann. Der Antrieb der Saugerarme erfolgt durch Rollensterneinheiten, die mit den Saugerarmen verbunden sind und am Innenumfang einer Kurvenscheibe umlaufen, so dass es zu einer Überlagerung der Drehbewegungen um die horizontale Mittelachse und die Lagerachse der Saugerarme kommt. Auf diese Weise wird eine Hypozykloidenbahn der Sauger erzielt, die für ein Übergeben und Aufrichten der Faltschachteln geeignet ist.

Um die Beanspruchung der Faltschachteln beim Auftreffen auf eine Kulisse oder sonstige Mitnehmerelemente des Transportmittels oder der Fördervorrichtung zu reduzieren, sind zum Beispiel in der DE 10 2009 050 092 A1 und der EP 0 434 961 A1 Übergabevorrichtungen beschrieben, die im Bereich der Bewegungsbahnen der Faltschachteln durch die Übergabevorrichtung Gegensauger vorsehen. Die Gegensauger sind auf der den Saugern gegenüberliegenden Seite der Faltschachtel angeordnet und ermöglichen das Auffalten der Faltschachteln während des Transports durch die Übergabevorrichtung durch eine Relativbewegung zwischen den Saugern und den Gegensaugern. Zur weiteren Unterstützung des Aufrichtvorgangs bzw. zum Halten der Faltschachtel in einem aufgerichteten Zustand können in der Nähe der Sauger Hebel vorgesehen sein, die dem Rückstellmoment der Faltschachtel nach der Aufrichtung entgegenwirken.

Bei diesen Vorrichtungen wirken auf die Faltschachteln weiterhin relativ hohe Beschleunigungen, die aus dem großen Abstand der Bewegungsbahn der Faltschachteln zu der Drehachse der Vorrichtung bzw. aus der hypozykloidenförmigen Bewegungsbahn der Faltschachteln durch die Vorrichtung resultieren. Aufgrund der Anordnung der Gegensauger einschließlich der benötigten Montageeinrichtungen, Saugmittel und eines Antriebs außerhalb der Bewegungsbahn der Faltschachteln resultiert des Weiteren ein verhältnismäßig hoher Platzbedarf der Übergabevorrichtung. Sowohl die Anordnung der Gegensauger als auch die auftretenden Beschleunigungen und Belastungen begrenzen daher die Fördergeschwindigkeit der Faltschachteln in der Übergabevorrichtung und dadurch die Leistung der Übergabevorrichtung.

Der vorliegenden Erfindung liegt die Aufgabe zugrunde, eine Vorrichtung und ein Verfahren zum Übergeben von Faltschachteln bereitzustellen, mit denen bei geringem Platzbedarf ein schonendes Aufstellen der Faltschachteln bei zugleich hoher Leistung erzielt werden kann.

Diese Aufgabe wird durch die Merkmale der Ansprüche 1 bzw. 10 gelöst.

Erfindungsgemäß umfasst die Vorrichtung zum Übergeben von Faltschachteln eine stationäre erste Drehachse und mindestens eine Saugeranordnung, die mindestens einen Sauger umfasst und die dazu eingerichtet ist, eine Faltschachtel entlang einer ersten Bewegungsbahn durch die Vorrichtung zu transportieren, wobei die mindestens eine Saugeranordnung um die erste Drehachse drehbar gelagert ist und zumindest der Sauger um eine nicht stationäre zweite Drehachse drehbar gelagert ist. Außerdem umfasst die Vorrichtung eine Gegensaugeranordnung, die mindestens einen Gegensauger umfasst, wobei der mindestens eine Sauger und der mindestens eine Gegensauger in einem Auffaltbereich derart zusammenwirken, dass sie die Faltschachtel zumindest teilweise auffalten. Der mindestens eine Gegensauger ist dabei zumindest im Auffaltbereich bezüglich der stationären ersten Drehachse radial innerhalb des mindestens einen Saugers angeordnet.

Indem die Gegensaugeranordnung innerhalb der umlaufenden Saugeranordnungen angeordnet wird, kann der Platzbedarf der Übergabevorrichtung wesentlich verringert werden. Zudem wird es ermöglicht, die Bewegungsbahn der Faltschachteln durch die Vorrichtung derart zu gestalten, dass diese nach der Entnahme der Faltschachteln aus dem Faltschachtelmagazin keine zykloidenartigen Spitzen aufweist. Die Faltschachteln können während ihres Transport also kontinuierlich bewegt werden und müssen nicht nahezu vollständig abgebremst und erneut beschleunigt werden, wie dies bei herkömmlichen Übergabevorrichtungen der Fall war. Dies wirkt sich schonend auf die Faltschachteln aus bzw. kann bei gleicher Belastung zur Erhöhung der Transportgeschwindigkeit in der Übergabevorrichtung und somit zur Steigerung der Leistung der Übergabevorrichtung genutzt werden.

Um den mindestens einen Gegensauger mit der Faltschachtel mitbewegen zu können und dadurch die Kontaktzeit zwischen dem mindestens einen Gegensauger und der Faltschachtel zu erhöhen, ist die Gegensaugeranordnung vorzugsweise um eine dritte Drehachse drehbar gelagert. Eine längere Kontaktzeit zwischen dem Gegensauger und der Faltschachtel kann zu einem vollständigeren und zuverlässigeren Aufrichten der Faltschachtel genutzt werden.

Es ist weiter bevorzugt, dass die Gegensaugeranordnung derart exzentrisch um die dritte Drehachse gelagert ist, dass der mindestens eine Gegensauger während einer Umdrehung der Gegensaugeranordnung um die dritte Drehachse eine im Wesentlichen elliptische zweite Bewegungsbahn beschreibt. Auf diese Weise können die erste und die zweite Bewegungsbahn optimal aufeinander abgestimmt werden. Durch die relativ zur ersten Bewegungsbahn bezüglich der stationären ersten Drehachse innenliegende elliptische zweite Bewegungsbahn wird erreicht, dass sich der Gegensauger allmählich an die durch die Vorrichtung hindurch transportierte Faltschachtel annähert, bis er sich nahe genug an deren Oberfläche befindet, um sie anzusaugen. Im weiteren Verlauf vergrößert sich der Abstand zwischen Sauger und Gegensauger in dem Bereich, in dem der Sauger und der Gegensauger die Faltschachtel zugleich ansaugen, allmählich, so dass die Faltschachtel aufgerichtet wird.

Vorzugsweise umfasst die Gegensaugeranordnung zusätzlich mindestens eine Linearführung. Diese führt den Gegensauger zusammen mit der exzentrischen Lagerung um die dritte Drehachse auf der bevorzugten elliptischen Bewegungsbahn. Zudem kann dadurch erreicht werden, dass der Gegensauger stets im Wesentlichen nach oben ausgerichtet ist, d.h. dass eine Mittelachse des Saugers, die senkrecht zu dessen Saugfläche definiert ist, stets in einem Bereich von 0° bis +/- 80°, vorzugsweise von 0° bis +/- 60° zur Vertikalen ausgerichtet ist. Der Gegensauger kann dadurch zum einen schnell in seine Ausgangsposition zurückgebracht werden, wo er zum Auffalten einer neuen Faltschachtel bereit steht, wodurch der Durchsatz an Faltschachteln erheblich erhöht werden kann. Zum anderen wird dadurch vermieden, dass der Gegensauger in einem Bereich, in dem er nicht zum Auffalten der Faltschachteln benötigt wird, die Bewegungsbahn der Faltschachteln behindert.

Vorzugsweise sind eine erste Saugfläche des Saugers und eine zweite Saugfläche des Gegensaugers im Auffaltbereich im Wesentlichen zueinander ausgerichtet und liegen einander gegenüber. Dadurch wird erreicht, dass die zu transportierende und aufzufaltende Faltschachtel zwischen dem Sauger und dem Gegensauger aufgenommen werden kann, während die Saugflächen des Saugers und des Gegensaugers jeweils mit gegenüberliegenden Seitenflächen der Faltschachtel in Kontakt stehen. Durch das Auseinanderbewegen der ersten und der zweiten Saugfläche des Saugers und des Gegensaugers wird somit ein Auffalten der Faltschachtel erreicht.

In einer bevorzugten Ausführungsform ist die mindestens eine Saugeranordnung derart gelagert, dass die zweite Drehachse während einer Umdrehung um die stationäre erste Drehachse eine kreisförmige dritte Bewegungsbahn beschreibt. Auf diese Weise lässt sich die Saugeranordnung besonders einfach, z.B. auf einem die stationäre erste Drehachse kontinuierlich umlaufenden Träger, lagern und antreiben, während zugleich auf möglichst einfache Weise die gewünschte, vorzugsweise nicht-kreisförmige erste Bewegungsbahn der Sauger realisiert werden kann. Insbesondere wirken geringe Beschleunigungen auf die Saugeranordnung.

In einer besonders bevorzugten Ausführungsform umfasst die mindestens eine Saugeranordnung mindestens einen Hebel, der neben dem mindestens einen Sauger angeordnet ist und der um eine vierte Drehachse schwenkbar gelagert ist. Derartige Hebel werden üblicherweise auch als Überbrechklappen bezeichnet und dienen der Unterstützung des Aufklappens bzw. Auffaltens der Faltschachtel, dem Überbrechen derselben und der Stützung der Faltschachtel in einem aufgefalteten Zustand entgegen dem auf die Faltschachteln wirkenden Rückstellmoment in den Faltstellen. "Überbrechen" bedeutet in diesem Zusammenhang, dass die Faltschachtel derart gefaltet wird, dass zwischen der Seitenfläche der Faltschachtel, die mit dem Sauger in Verbindung steht, und der Seitenfläche der Faltschachtel, auf die der Hebel wirkt, ein Innenwinkel von weniger als 90° erzeugt wird. Im zusammengefalteten Zustand, in dem die Faltschachtel aus dem Faltschachtelmagazin entnommen wird, beträgt dieser Winkel ca. 180°. Durch das Überbrechen kann das auf die Faltschachtel wirkende Rückstellmoment, das aufgrund der Faltung und Verklebung der Faltschachtel auf die Faltschachtel wirkt, teilweise egalisiert werden, so dass die Faltschachtel in den folgenden Prozessen besser verarbeitet werden kann. Zudem kann die Faltschachtel durch den Hebel in der gewünschten Auffaltposition gehalten werden, bis sie an eine nachfolgende Fördervorrichtung übergeben wird.

Der mindestens eine Hebel ist vorzugsweise zwischen einer Ausgangsposition und einer Endposition schwenkbar gelagert, wobei der Hebel in der Ausgangsposition derart angeordnet ist, dass er eine Ebene, die durch die erste Saugfläche definiert ist, nicht schneidet, und in der Endposition derart angeordnet ist, dass er diese Ebene schneidet. Der Hebel steht somit in der Ausgangsposition nicht mit der zu transportierenden Faltschachtel, die von dem entsprechenden Sauger angesaugt wird, in Berührung und beeinflusst diese nicht. Durch das Schwenken des Hebels in die Endposition kommt er in Kontakt mit der Faltschachtel, insbesondere mit einer Seitenfläche, die zwischen der Seitenfläche, die in Kontakt mit dem Sauger steht, und der Seitenfläche, die in Kontakt mit dem Gegensauger steht, angeordnet ist, und unterstützt das Aufrichten der Faltschachtel. Je nach Anwendungsfall und Bedarf kann die Endposition dabei erreicht werden, wenn der Hebel die Faltschachtel überbricht, d.h. wenn der oben definierte Innenwinkel kleiner als 90° ist, oder wenn die Faltschachtel vollständig aufgerichtet ist, d.h. wenn der oben definierte Innenwinkel zwischen den Seitenflächen der Faltschachtel etwa 90° beträgt. Es ist auch eine Endposition des Hebels denkbar, in der dieser Innenwinkel zwischen den Seitenflächen größer als 90° ist. Zudem ist jede Zwischenstellung des Hebels realisierbar.

Vorzugsweise sind die erste, die zweite und die dritte Drehachse parallel zueinander, insbesondere horizontal ausgerichtet. Weiterhin ist bevorzugt, dass auch die vierte Drehachse parallel zu der ersten, der zweiten und der dritten Drehachse ausgerichtet ist. Dies ermöglicht eine einfache Überlagerung der Bewegungen um die einzelnen Drehachsen, wodurch insbesondere eine vereinfachte Kinematik realisiert werden kann.

Ein erfindungsgemäßes Verfahren zum Übergeben von Faltschachteln an eine Fördervorrichtung durch eine Übergabevorrichtung umfasst folgende Schritte:
- Bereitstellen der Übergabevorrichtung mit mindestens einem Sauger und mindestens einem Gegensauger;
- Bewegen des mindestens einen Saugers an eine zu übergebende Faltschachtel;
- Ansaugen der Faltschachtel mit dem mindestens einen Sauger und dadurch Herstellen einer Verbindung zwischen der Faltschachtel und dem Sauger;
- gemeinsames Bewegen des mindestens einen Saugers und der Faltschachtel durch die Übergabevorrichtung entlang einer ersten Bewegungsbahn des mindestens einen Saugers;
- Annähern des mindestens einen Saugers und der Faltschachtel an den mindestens einen Gegensauger, wobei der mindestens eine Gegensauger bezüglich der stationären ersten Drehachse radial innerhalb des Saugers angeordnet ist;
- zeitgleiches Ansaugen der Faltschachtel mit dem mindestens einen Gegensauger und dem mindestens einen Sauger in dem Auffaltbereich;
- Auseinanderbewegen des mindestens einen Saugers und des mindestens einen Gegensaugers während des zeitgleichen Ansaugens im Auffaltbereich derart, dass sie die Faltschachtel zumindest teilweise auffalten;
- Lösen des mindestens einen Gegensaugers von der zumindest teilweise aufgefalteten Faltschachtel;
- Übergeben der Faltschachtel von dem mindestens einen Sauger an die Fördervorrichtung; und
- Lösen des mindestens einen Saugers von der Faltschachtel.

Auf diese Weise kann die Faltschachtel besonders schonend mittels der Übergabevorrichtung zu einer Fördervorrichtung bewegt werden, wobei zugleich ein platzsparender Aufbau der Übergabevorrichtung erreicht wird.

Dabei bewegt sich der Gegensauger vorzugsweise auf einer zweiten Bewegungsbahn. Die erste und die zweite Bewegungsbahn verlaufen dabei vorzugsweise derart, dass sie sich zunächst aneinander annähern, bis sowohl der Sauger als auch der Gegensauger mit der Faltschachtel in Verbindung stehen, und anschließend zum Auffalten der Faltschachtel voneinander entfernen, bis der Gegensauger sich schließlich von der Faltschachtel löst. Der Gegensauger wird daraufhin wieder zurück bewegt, um die nächste Faltschachtel anzusaugen. Die Bewegung des Gegensaugers erfolgt dabei vorzugsweise auf einer elliptischen zweiten Bewegungsbahn, wobei der Gegensauger kontinuierlich, schwellend oder auch in Intervallen mit zwischenliegenden Ruhepausen bewegt werden kann.

Bevorzugt bilden die erste und die zweite Bewegungsbahn jeweils eine geschlossene Kurve. Dies wirkt sich besonders vorteilhaft auf die Führung, Lagerung, Steuerung und den Antrieb der bewegten Elemente aus, da diese bei umlaufenden Bewegungen einfacher gestaltet werden können.

Vorzugsweise stehen während des Auffaltens der Faltschachtel im Auffaltbereich eine erste Saugfläche des mindestens einen Saugers und eine zweite Saugfläche des mindestens einen Gegensaugers mit der Faltschachtel in Wirkverbindung. Die Wirkverbindung wird vorzugsweise durch eine kraftschlüssige Verbindung aufgrund der Saugkraft des Saugers und des Gegensaugers erzielt.

Es ist bevorzugt, dass die Faltschachtel mittels der Übergabevorrichtung kontinuierlich zur Fördervorrichtung bewegt wird. Weiterhin ist es besonders vorteilhaft, wenn die Geschwindigkeit und Bewegungsrichtung der Faltschachtel in der Übergabevorrichtung während der Übergabe mit der Geschwindigkeit und Bewegungsrichtung der Fördervorrichtung im Wesentlichen übereinstimmt. Durch die kontinuierliche Bewegung der Faltschachtel kann diese besonders schonend bewegt werden, insbesondere werden Beschleunigungsspitzen und hohe Beschleunigungen vermieden.

Weitere Merkmale und Vorteile der vorliegenden Erfindung ergeben sich aus der nachfolgenden Beschreibung unter Bezugnahme auf die Zeichnungen.
- Fig. 1: zeigt eine schematische Ansicht wesentlicher Komponenten einer erfindungsgemäßen Vorrichtung zum Übergeben von Faltschachteln;
- Fig. 2: zeigt eine perspektivische Ansicht einer Ausführungsform der erfindungsgemäßen Vorrichtung zum Übergeben von Faltschachteln;
- Fig. 3: zeigt eine perspektivische Detailansicht der Saugeranordnung der Ausführungsform der erfindungsgemäßen Vorrichtung zum Übergeben von Faltschachteln nach Fig. 2;
- Fig. 4: zeigt eine perspektivische Detailansicht der Gegensaugeranordnung der Ausführungsform der erfindungsgemäßen Vorrichtung zum Übergeben von Faltschachteln nach Fig. 2;
- Fig. 5a-5h: zeigen den Bewegungsablauf des Übergabevorgangs anhand der schematischen Ansicht der wesentlichen Komponenten der erfindungsgemäßen Vorrichtung zum Übergeben von Faltschachteln nach Fig. 1.

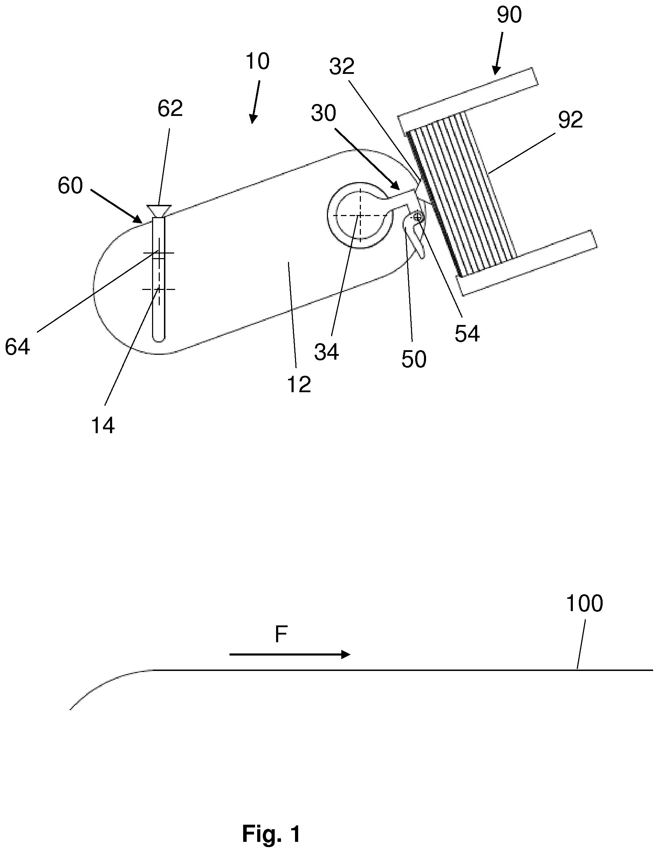

Fig. 1 zeigt schematisch die wesentlichen Komponenten der erfindungsgemäßen Vorrichtung 10 zum Übergeben von Faltschachteln 92 aus einem Faltschachtelmagazin 90 an eine Fördervorrichtung 100. Mit "Faltschachtel" wird hierbei sowohl der zusammengefaltete Zuschnitt einer Faltschachtel bezeichnet als auch die Faltschachtel im aufgerichteten Zustand.

Alternativ zu dem Faltschachtelmagazin 90 können auch andere Bereitstellungsvorrichtungen vorgesehen sein, die Faltschachteln 92 als Zuschnitte stationär bereitstellen oder kontinuierlich heranfördern, wie z.B. Förderbänder. Als Fördervorrichtung 100 können beispielsweise ein Förderband, eine Förderkette oder ein Schienensystem vorgesehen sein, die Mittel zur Auf- und Mitnahme der Faltschachteln 92 aufweisen. Die dargestellte Anordnung der Vorrichtung 10, des Faltschachtelmagazins 90 und der Fördervorrichtung 100 relativ zueinander dient der Veranschaulichung und kann entsprechend an die vorliegenden Gegebenheiten angepasst werden.

Die Vorrichtung 10 wird verwendet, um Faltschachteln 92, die üblicherweise nach dem Ausstanzen aus einem Rohmaterial (wie z.B. Papier oder Pappe) und dem Verkleben bzw. Zusammenstecken in einem zusammengefalteten Zustand als Zuschnitte bereitgestellt oder angeliefert werden, an die Fördervorrichtung 100 zu übergeben, von der die Faltschachteln 92 in einer Förderrichtung F weiteren Prozessen, wie z.B. dem Befüllen der Faltschachteln 92 mit einem Produkt, zugeführt werden. Während der Übergabe der Faltschachteln 92 an die Fördervorrichtung 100 mittels der Vorrichtung 10 müssen die Faltschachteln 92 zumindest teilweise aufgefaltet werden, um sie in dem zumindest teilweise aufgefalteten Zustand, der für die weiteren Prozesse geeignet ist, an die Fördervorrichtung 100 zu übergeben. Hierzu umfasst die Vorrichtung 10 mindestens eine Saugeranordnung 30 und eine Gegensaugeranordnung 60. Die Saugeranordnung 30 kann an einem Träger 12 der Vorrichtung 10 befestigt oder in diesem gelagert. Der Träger 12 ist wiederum derart gelagert, dass er um eine stationäre erste Drehachse 14 drehbar ist. Die stationäre erste Drehachse 14 ist vorzugsweise horizontal ausgerichtet und erstreckt sich in Fig. 1 senkrecht zur Zeichenebene.

Die Saugeranordnung 30 umfasst mindestens einen Sauger 32 und ist dazu eingerichtet, eine Faltschachtel 92 entlang einer Bewegungsbahn durch die Vorrichtung 10 zu transportieren. Hierzu weist der Sauger 32 eine erste Saugfläche 36 auf, mit der er eine Faltschachtel 92 aus dem Faltschachtelmagazin 90 ansaugen kann. An der ersten Saugfläche 36 erzeugt der Sauger 32 durch Unterdruck oder Vakuum eine Saugkraft, die eine kraftschlüssige Verbindung zwischen der ersten Saugfläche 36 des Saugers 32 und der Faltschachtel 92 bewirkt. Nach dem Entnehmen der Faltschachtel 92 aus dem Faltschachtelmagazin 90 bewegt der Sauger 32 die Faltschachtel 92 entlang einer ersten Bewegungsbahn 320 (nicht dargestellt) des Saugers 32 durch die Vorrichtung 10. Dabei ist die Saugeranordnung 30 derart gelagert, dass die gesamte Saugeranordnung 30 um die stationäre erste Drehachse drehbar ist und zumindest der Sauger 32 um eine nicht stationäre zweite Drehachse 34 drehbar ist. Es können sich auch die gesamte Saugeranordnung 30 oder bestimmte Komponenten derselben einschließlich des Saugers 32 um die zweite Drehachse 34 drehen. Die zweite Drehachse 34 ist vorzugsweise horizontal ausgerichtet und erstreckt sich in Fig. 1 senkrecht zur Zeichenebene.

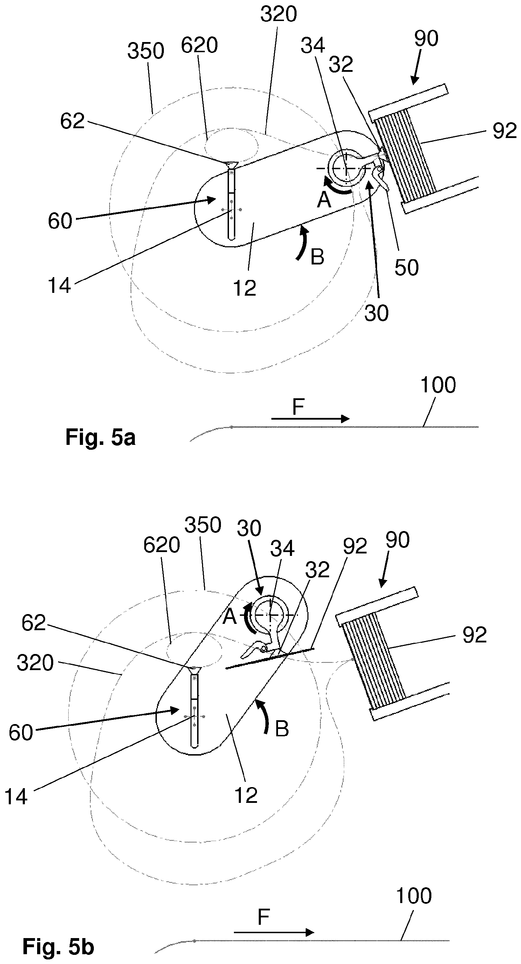

Im dargestellten Fall kann sich die Saugeranordnung 30 mit dem Träger 12 entgegen dem Uhrzeigersinn um die stationäre erste Drehachse 14 drehen und zumindest der Sauger 32 kann sich zugleich im Uhrzeigersinn um die zweite Drehachse 34 drehen. Auf diese Weise wird erreicht, dass der Sauger 32 die Faltschachtel 92 in den Wirkbereich der Gegensaugeranordnung 60 befördert. Der genaue Bewegungsablauf geht aus den Fig. 5a-5h hervor. Es versteht sich, dass die Drehrichtungen an die gegebenen Voraussetzungen, insbesondere an das Maschinenumfeld, angepasst werden können.

Die Gegensaugeranordnung 60 umfasst mindestens einen Gegensauger 62. Der Wirkbereich der Gegensaugeranordnung 60 ist dabei der Bereich, in dem die Saugkraft, die von dem Gegensauger 62 an dessen zweiter Saugfläche 66 z.B. durch Unterdruck oder Vakuum erzeugt wird, auf die Faltschachtel 92 wirkt. Ist die Faltschachtel 92 nahe genug am Gegensauger 62 angeordnet, saugt dieser die Faltschachtel 92 ebenfalls an und stellt idealerweise eine kraftschlüssige Verbindung zwischen der zweiten Saugfläche 66 und der Oberfläche der Faltschachtel 92 her. Somit stehen die Saugeranordnung 30 und die Gegensaugeranordung 60 zugleich mit der Faltschachtel 92 in Verbindung, wobei ein Auseinanderbewegen des Saugers 32 und des Gegensaugers 62 ein Auffalten der Faltschachtel 92 bewirkt. Dieser Bereich, in dem sowohl der Sauger 32 als auch der Gegensauger 62 in Verbindung mit der Faltschachtel 92 stehen, ist als "Auffaltbereich" definiert. Im Auffaltbereich sind die erste und die zweite Saugfläche 36, 66 folglich zueinander ausgerichtet und liegen sich im Wesentlichen gegenüber, sodass sie die Faltschachtel 92 zwischen sich aufnehmen können. Sobald die Faltschachtel 92 ausreichend weit aufgefaltet ist, löst sich der Gegensauger 62 von der Faltschachtel 92 und die zumindest teilweise aufgerichtete Faltschachtel 92 wird von dem Sauger 32 weiter in Richtung der Fördervorrichtung 100 transportiert.

Wie in Fig. 1 zu erkennen ist, ist der Gegensauger 62 bezüglich der stationären ersten Drehachse 14 radial innerhalb des Saugers 32 angeordnet. D.h., dass der Abstand des Gegensaugers 62 zur ersten Drehachse 14 kleiner ist als der Abstand des Saugers 32 zur ersten Drehachse 14. Erfindungsgemäß ist dies zumindest im Auffaltbereich gegeben. Vorzugsweise befindet sich der Gegensauger 62 jedoch stets bezüglich der ersten Drehachse 14 radial innerhalb des Saugers 32. Insbesondere soll dies auch gegeben sein, wenn der Gegensauger 62 nicht feststehend, sondern bewegbar ausgebildet ist. Besonders deutlich wird diese Bedingung anhand der unten beschriebenen und in den Fig. 5a-5h dargestellten Bewegungsabläufe, in denen eine erste Bewegungsbahn 320 des Saugers 32 und eine zweite Bewegungsbahn 620 des Gegensaugers 62 zu sehen sind. Es ist aber auch denkbar, dass die erste Bewegungsbahn 320 des Saugers 32 derart ausgebildet ist, dass sich der Sauger 32 in einem Bereich außerhalb des Auffaltbereichs näher an der stationären ersten Drehachse 14 befindet als der Gegensauger 62.

Die Anordnung der Gegensaugeranordnung 60 radial innerhalb der rotierenden Sauger 32 bietet insbesondere die Vorteile, dass die Beschleunigungskräfte auf die zu bewegende Faltschachtel 92 minimiert werden können, da von dieser zum einen weniger Zykloidenspitzen als in den Vorrichtungen des Standes der Technik abgefahren werden müssen und zum anderen der Abstand zwischen Faltschachtel 92 und stationärer erster Drehachse 14 reduziert werden kann. Zudem besteht die Möglichkeit, bei bewegten Gegensaugern 62 die Bewegungsbahnen 320, 620 der Sauger 32 und der Gegensauger 62 derart zu gestalten, dass die Zeit, die zum Gegensaugen zur Verfügung steht, erhöht werden kann, wodurch ein zuverlässiges Auffalten der Faltschachtel 92 gewährleistet wird.

Des Weiteren ist in Fig. 1 zu sehen, dass die Saugeranordnung 30 einen Hebel 50 umfasst, der neben dem Sauger 32 angeordnet ist und an der Saugeranordnung 30 um eine vierte Drehachse 54 schwenkbar gelagert ist. Dieser Hebel 50 kann die Funktion einer sogenannten Überbrechklappe übernehmen, die das Auffalten der Faltschachtel 92 unterstützt und insbesondere dazu geeignet ist, die Faltschachtel 92 zu überbrechen und/oder die Faltschachtel 92 in einem aufgerichteten Zustand zu stützen. Es versteht sich, dass der Hebel 50 zur Unterstützung des Auffaltens, zum Stützen der aufgefalteten Faltschachtel 92 und/oder zum Überbrechen der Faltschachtel 92 vorgesehen sein kann, jedoch zur Umsetzung der erfindungsgemäßen Vorrichtung 10 und insbesondere zum Auffalten der Faltschachteln 92 nicht zwingend erforderlich ist. Die Kombination aus Gegensauger 62 und Hebel 50 bietet jedoch den entscheidenden Vorteil, dass ein zuverlässiges Aufrichten und Überbrechen der Faltschachtel 92 auch bei schlechter Faltschachtelqualität gewährleistet wird.

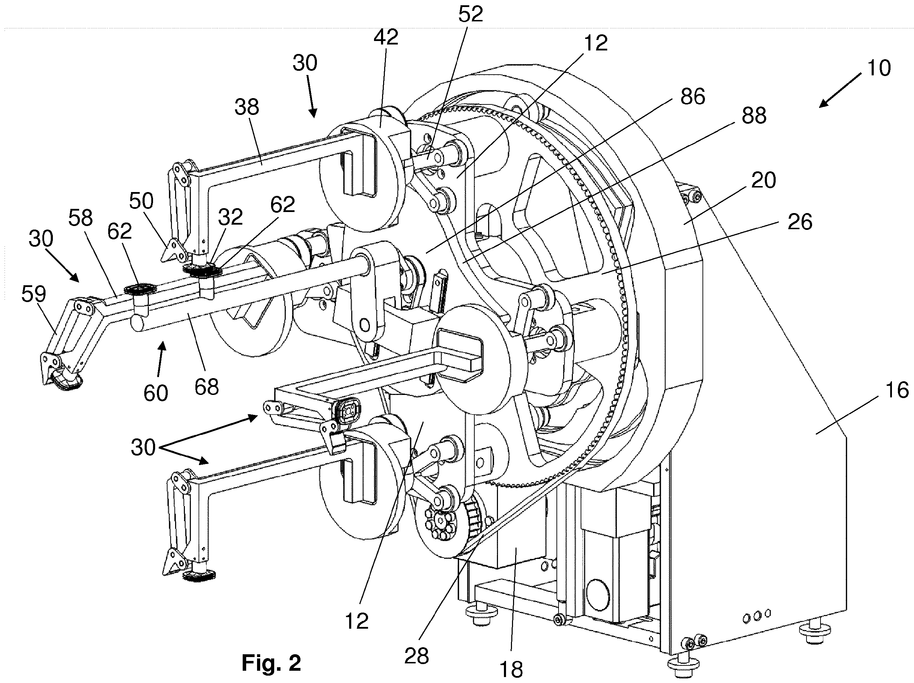

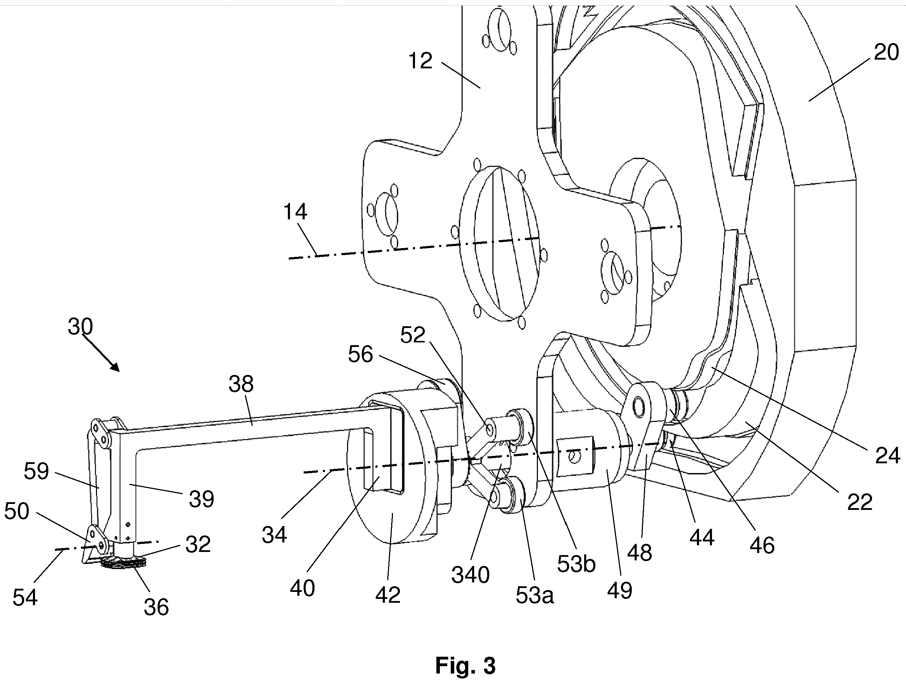

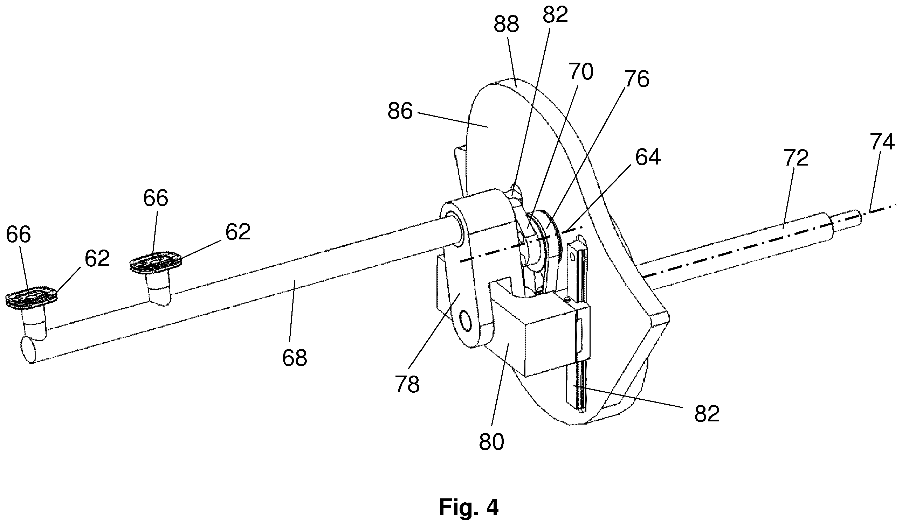

In Fig. 2 ist eine beispielhafte Ausführungsform der erfindungsgemäßen Vorrichtung 10 perspektivisch dargestellt. Die in Fig. 2 dargestellte Vorrichtung 10 umfasst insgesamt vier Saugeranordnungen 30, die in regelmäßigen Abständen um eine Gegensaugeranordnung 60 angeordnet sind. Es versteht sich, dass die Vorrichtung 10 entsprechend skaliert werden kann und je nach Bedarf mehr oder weniger Saugeranordnungen 30 vorgesehen sein können. Ebenso ist die Verwendung mehrerer Gegensaugeranordnungen 60 denkbar. Details der Saugeranordnungen 30 gehen aus Fig. 3 hervor, während die Gegensaugeranordnung 60 in Fig. 4 isoliert dargestellt ist.

Die Vorrichtung 10 umfasst ein Gestell 16, an dem ein Antrieb 18 und eine Führungsplatte 20 befestigt sind. Der Antrieb 18 treibt eine Antriebsscheibe 26 an, die vorzugsweise drehbar, z.B. mittels Wälzlager, auf einer feststehenden Welle (nicht dargestellt) gelagert ist. Die Drehachse der Antriebsscheibe 26 und die feststehende Welle sind vorzugsweise koaxial mit der stationären ersten Drehachse 14 ausgebildet. Die feststehende Welle ist am Gestell 16 der Vorrichtung 10 angebracht. In der dargestellten Ausführungsform erfolgt die Übertragung des Drehmoments vom Antrieb 18 auf die Antriebsscheibe 26 mittels eines Zahnriemens 28. Es versteht sich, dass verschiedene Antriebsarten möglich sind, wie beispielsweise eine direkte Kopplung der Antriebswelle des Antriebs 18 mit der Drehachse der Kurvenscheibe 26 oder eine Übertragung des Drehmoments von dem Antrieb 18 auf die Antriebsscheibe 26 durch Zahnräder, ein Getriebe, einen Keilriemen oder ähnliche Mittel.

Der Träger 12 der Vorrichtung 10 weist in der dargestellten Ausführungsform die Form eines Drehkreuzes mit vier Stegen auf, wobei an jedem Steg des Kreuzes eine Saugeranordnung 30 angeordnet ist und der Träger 12 mittig eine kreisrunde Öffnung aufweist, wie insbesondere aus Fig. 3 hervorgeht. Der Träger 12 kann auch als Kreisscheibe ausgebildet sein, wenn beispielsweise mehr als vier Saugeranordnungen 30 vorgesehen sind. Die Form eines Kreuzes ermöglicht gegenüber einer Kreisscheibe jedoch eine Materialeinsparung und Reduzierung der bewegten Massen. Der Träger 12 ist drehbar, z.B. mittels Wälzlager, auf der feststehenden Welle gelagert, auf der auch die Antriebsscheibe 26 drehbar gelagert ist. Es ist auch denkbar, dass der Träger 12 und die Antriebsscheibe 26 jeweils drehfest mit einer gemeinsamen Hülse verbunden sind und diese Hülse drehbar auf der feststehenden Welle gelagert ist. Geeignete Welle-Nabe-Verbindungen für die Verbindung der Hülse mit der Antriebsscheibe 26 und dem Träger 12 sind dem Fachmann bekannt. Es ist dabei bevorzugt, dass der Träger 12 und die Antriebsscheibe 26 derart miteinander verbunden sind, dass die durch den Antrieb 18 bewirkte Drehung der Antriebscheibe 26 direkt auf den Träger 12 übertragen wird.

Die Saugeranordnungen 30 und die Gegensaugeranordnung 60 der in Fig. 2 dargestellten Ausführungsform werden im Folgenden unter Bezugnahme auf Fig. 3 und 4 detaillierter beschrieben.

In Fig. 3 sind zu Zwecken der besseren Übersicht lediglich eine Saugeranordnung 30, der Träger 12 und die Führungsplatte 20 dargestellt, während die übrigen in Fig. 2 ersichtlichen Komponenten ausgeblendet sind. Die Saugeranordnung 30 umfasst mindestens einen Sauger 32, der an einem vorderen Ende eines Saugerarms 38 angeordnet ist. Der Saugerarm 38 weist eine im Wesentlichen torförmige oder C-förmige Gestalt auf, bei der zwei parallele Stege 39, 40 von einem Verbindungsstück senkrecht abragen. Der Sauger 32 ist dabei an einem freien Ende des ersten Stegs 39 angeordnet und der zweite Steg 40 ist mit einem plattenförmigen Element 42 verbunden, beispielsweise mittels Verschraubung.

Des Weiteren umfasst die Saugeranordnung 30 eine erste Führungsrolle 44 und eine zweite Führungsrolle 46, die in einer ersten Kurvenbahn 22 bzw. einer zweiten Kurvenbahn 24 der Führungsplatte 20 aufgenommen und geführt sind. Die erste und die zweite Kurvenbahn 22, 24 können dabei durchgehend, die Führungsplatte 20 vollständig durchdringend, ausgebildet sein, oder nutförmig in die Führungsplatte 20 eingebracht sein. Die Führungsrollen 44, 46 sind derart ausgebildet, dass sie in den Kurvenbahnen 22, 24 abrollen können. Die erste und die zweite Führungsrolle 44, 46 sind drehbar an einem Halteelement 48 gelagert, das die beiden Rollen 44, 46 bzw. die Rollen 44, 46 haltende Wellenstümpfe miteinander verbindet. Das Halteelement 48 ist drehfest mit einer ersten Welle 340 verbunden. Die Längsachse der ersten Welle 340 definiert die zweite Drehachse 34, um die zumindest der Sauger 32, im vorliegenden Fall die gesamte Saugeranordnung 30, drehbar gelagert ist. Das dem Halteelement 48 gegenüberliegende Ende der Welle 340 ist drehfest mit dem plattenförmigen Element 42 der Saugeranordnung 30 verbunden.

In der dargestellten Ausführungsform ist die erste Welle 340 in einer Buchse 49 drehbar gelagert, die zwischen der Antriebsscheibe 26 und dem Träger 12 aufgenommen ist. Vorzugsweise ist die Buchse 49 fest mit dem Träger 12 und der Antriebsscheibe 26 verbunden und weist eine Bohrung zur Aufnahme und rotatorischen Lagerung der ersten Welle 340 z.B. mittels mindestens eines Wälzlagers, auf.

Da der Träger 12 und die Antriebsscheibe 26 an mehreren Stellen fest miteinander verbunden sein können (z.B. mittels einer mittigen Hülse und den Buchsen 49), ist für den Fachmann ersichtlich, dass der Träger 12 und die Antriebsscheibe 26 auch integral als ein Element ausgebildet sein können.

Wie in Fig. 3 zu erkennen ist, verlaufen die erste Kurvenbahn 22 und die zweite Kurvenbahn 24 in der Führungsplatte 20 relativ zueinander mit variablem Abstand, sodass die in den Kurvenbahnen 22, 24 geführten Führungsrollen 44, 46 der Saugeranordnung 30 sich derart relativ zueinander verschieben, dass sich das Halteelement 48 dreht. Der Abstand der Drehachsen der Führungsrollen 44, 46 bleibt konstant. Das Drehen des Halteelements 48 bewirkt zugleich eine Drehung der damit fest verbundenen ersten Welle 340 um die zweite Drehachse 34 und dadurch eine entsprechende Drehung der gesamten Saugeranordnung 30 um die zweite Drehachse 34.

Während einer Umdrehung der Saugeranordnung 30 um die stationäre erste Drehachse 14 durchlaufen die Führungsrollen 44, 46 jeweils vollständig die entsprechende Kurvenbahn 22, 24. Es ist ersichtlich, dass die erste Bewegungsbahn 320 des Saugers 32 während einer Umdrehung der Saugeranordnung 30 um die stationäre erste Drehachse 14 durch den Verlauf der ersten und der zweiten Kurvenbahn 22, 24 definiert ist. Vorzugsweise dreht sich die Saugeranordnung 30 bzw. zumindest der Sauger 32 während einer Umdrehung um die stationäre erste Drehachse 14 zweimal um die zweite Drehachse 34, weshalb sich die erste Kurvenbahn 22 und die zweite Kurvenbahn 24 in der dargestellten Ausführungsform schneiden. Es versteht sich, dass durch den Verlauf der ersten und der zweiten Kurvenbahn 22, 24 die Bewegungsbahn 320 des Saugers 32 beliebig an die gegebenen Umstände, insbesondere an die Position des Faltschachtelmagazins 90 und der Fördervorrichtung 100, angepasst werden kann. So kann sich der Sauger 32 bzw. die Saugeranordnung 30 während einer Umdrehung um die erste Drehachse 14 beliebig oft um die zweite Drehachse 34 drehen oder in bestimmten Abschnitten der ersten Bewegungsbahn 320 relativ zum Träger 12 stillstehen. Dies wird durch abschnittsweise parallel verlaufende Kurvenbahnen 22, 24 erreicht.

Die Saugeranordnung 30 kann weiterhin einen Ausleger 52 umfassen. Dieser ist drehbar um die erste Welle 340 auf dieser gelagert und weist eine im Wesentlichen V-förmige Gestalt mit zwei Schenkeln auf. An dem freien Ende jedes der beiden Schenkel weist der Ausleger 52 jeweils eine Führungsrolle 53a, 53b auf. Vorzugsweise ist der Ausleger 52 möglichst nah am plattenförmigen Element 42 der Saugeranordnung 30 auf der Welle 340 angeordnet.

Der Ausleger 52 ist dabei unabhängig von der Welle 340 und relativ zu dieser drehbar. Eine Drehbewegung des Auslegers 52 um die erste Welle 340 und somit um die zweite Drehachse 34 bewirkt ein Schwenken des Hebels 50 um eine vierte Drehachse 54. Hierzu wird die Drehbewegung des Auslegers 52 über einen Übertragungsmechanismus, der in der dargestellten Ausführungsform zwei (Zahn-) Räder und einen Keil- oder Zahnriemen 56 umfasst, auf eine zweite Welle 58 (Fig. 2) übertragen, die im Wesentlichen parallel zu dem Saugerarm 38 angeordnet ist. An einem vorderen, entfernt von dem Ausleger 52 angeordneten Ende des Saugerarms 38 ist die zweite Welle 58 z.B. am ersten Steg 39 des Saugerarms 38 gelenkig gelagert. Über ein Gelenk ist die Welle 58 derart mit einem Übertragungselement 59 verbunden, dass die rotatorische Bewegung der zweiten Welle 58 in einer im Wesentlichen translatorischen Bewegung des Übertragungselements 59 resultiert. Der Hebel 50 ist auf Höhe des Saugers 32 gelenkig am Saugerarm 38 bzw. an dessen erstem Steg 39 gelagert. Der Hebel 50 ist ebenfalls gelenkig mit dem Übertragungselement 59 verbunden, so dass die im Wesentlichen translatorische Bewegung des Übertragungselements 59 ein Schwenken des Hebels 50 um die vierte Drehachse 54 bewirkt. Es versteht sich, dass für den Fachmann alternative Übertragungsmechanismen zwischen dem Ausleger 52 und dem Hebel 50 denkbar sind. Vor allem ist es auch denkbar, den Ausleger 52 nicht auf der ersten Welle 340 zu lagern und/oder dessen Drehbewegung direkt mit einer Drehbewegung einer zweiten Welle 58 zu koppeln. Die Lagerung des Auslegers 52 auf der Welle 340 und insbesondere um die zweite Drehachse 34 bietet allerdings den Vorteil, dass eine Kraft, die an den Führungsrollen 53a, 53b angreift und ein Verdrehen des Auslegers 52 bewirkt, kein zusätzliches Drehmoment auf die Saugeranordnung 30 erzeugt, das eine Relativbewegung derselben bewirken könnte. Verschiedene Ausführungsformen von Hebeln 50 bzw. Überbrechklappen und deren Ansteuerung sind dem Fachmann bekannt.

Vorzugsweise ist der Ausleger 52 durch ein elastisches Element, wie z.B. eine Torsionsfeder, in eine Position vorgespannt, die einer Ausgangsposition des Hebels 50 entspricht. Alternativ kann auch der Hebel 50 oder eines der Übertragungselemente zwischen dem Hebel 50 und dem Ausleger 52 durch ein elastisches Element in eine Position vorgespannt sein, die der Ausgangsposition des Hebels 50 entspricht. Während einer Umdrehung der Saugeranordnung 30 um die stationäre erste Drehachse 14 treffen die Führungsrollen 53a, 53b in einem Teilbereich der Umdrehung auf eine Steuerkurve 88 einer Kurvenscheibe 86 (siehe Fig. 2 und 4). Wie in Fig. 2 zu sehen ist, rollt mindestens eine der beiden Führungsrollen 53a, 53b auf der Steuerkurve 88 ab, wodurch dieser Führungsrolle 53a, 53b eine Bewegung aus ihrer Ausgangslage heraus aufgezwungen wird. Die Steuerkurve 88 der Kurvenscheibe 86 ist dabei derart ausgebildet, dass sie den Führungsrollen 53a, 53b eine Bewegungsbahn vorgibt, die darin resultiert, dass der Ausleger 52 um die zweite Drehachse 34 gedreht wird. Infolgedessen wird der Hebel 50 in eine Position geschwenkt, die einer Endposition des Hebels 50 entspricht. Durch die Steigung der Steuerkurve 88 bzw. durch die Neigung der Steuerkurve 88 relativ zur unbeeinflussten Bewegungsbahn der Führungsrollen 53a, 53b um die erste Drehachse 14 kann die Drehgeschwindigkeit des Hebels 50 um die vierte Drehachse 54 definiert werden. Wie sich aus den Fig. 5a-5h ergibt, ist die Unterstützung des Hebels 50 zum Aufhalten und Stützen der Faltschachtel 92 nur in einem Teilbereich der ersten Bewegungsbahn 320 des Saugers 32 und der Faltschachtel 92 durch die Vorrichtung 10 notwendig. Die Kurvenscheibe 86 und die Steuerkurve 88 sind deshalb so angeordnet und ausgebildet, dass der Hebel 50 in dem gewünschten Bereich aus seiner Ausgangsposition in die Endposition geschwenkt wird, und der Hebel 50 während der restlichen Umdrehung der Saugeranordnung 30 um die stationäre erste Drehachse 14 in der Ausgangsposition verbleibt, in die er vorgespannt ist.

Die Kurvenscheibe 86 ist im Wesentlichen stationär angeordnet. Vorzugsweise ist die Kurvenscheibe mit einem vorderen, dem Maschinengestell abgewandten Ende der feststehenden Welle verbunden, auf der der Träger 12 und die Antriebsscheibe 26 drehbar gelagert sind. Beispielsweise kann die Kurvenscheibe 86 mit dem Ende der feststehenden Welle verschraubt sein. Die Kurvenscheibe 86 kann aber auch auf andere Weise mit dem Gestell 16 der Vorrichtung 10 oder mit einem entsprechenden Gehäuse verbunden sein.

Fig. 4 zeigt eine perspektivische Detailansicht der Gegensaugeranordnung 60 sowie der Kurvenscheibe 86. Die Gegensaugeranordnung 60 umfasst in der dargestellten Ausführungsform zwei Gegensauger 62, die an einem Gegensaugerarm 68 beabstandet zueinander angeordnet sind. Hierbei sind die zweiten Saugflächen 66 der Gegensauger 62 in einer Ebene angeordnet, so dass sie mit derselben Seitenfläche der Faltschachtel 92 in Verbindung stehen können. Es versteht sich, dass je nach Bedarf auch ein Gegensauger 62 oder mehr als zwei Gegensauger 62 vorgesehen werden können. Vorzugsweise ist der Gegensaugerarm 68 drehfest mit einem ersten Führungselement 78 verbunden. Ein Exzenter 70 ist mit dem ersten Führungselement 78 drehbar verbunden, vorzugsweise auf einer dem Gegensaugerarm 68 gegenüberliegenden Seite des ersten Führungselements 78. Der Exzenter 70 ist um die dritte Drehachse 64 drehbar gelagert. Beispielweise kann der Exzenter 70 über einen Wellenstumpf bzw. auf einer Welle, deren Längsachse koaxial mit der dritten Drehachse 64 ausgerichtet ist, in der Kurvenscheibe 86 gelagert sein. Die drehbare Verbindungsstelle zwischen dem Exzenter 70 und dem ersten Führungselement 78 ist dabei exzentrisch, also beabstandet zu der dritten Drehachse 64, angeordnet, so dass sich die Verbindungsstelle exzentrisch um die dritte Drehachse 64 bewegt. Die Gegensaugeranordnung 60 ist somit exzentrisch um die dritte Drehachse 64 gelagert. Es sind allerdings auch Ausführungsformen der Vorrichtung 10 denkbar, in denen die Gegensaugeranordnung 60 konzentrisch um eine dritte Drehachse 64 drehbar gelagert ist, oder gar stationär angeordnet ist.

Ein Antriebsmoment wird über eine dritte Welle 72, die sich um eine fünfte Drehachse 74 dreht, eingeleitet, und mittels eines Übertragungsmechanismus auf den Exzenter 70 übertragen. Beispielsweise umfasst der Übertragungsmechanismus einen Riemen 76, der das Moment von der dritten Welle 72 auf den Wellenstumpf bzw. die Welle überträgt, auf der der Exzenter 70 gelagert ist. Auch hier können alternative Übertragungsmechanismen vorgesehen werden. Der Antrieb der dritten Welle 72 kann durch eine Übertragung der Drehbewegung der Antriebsscheibe 26 oder des Antriebs 18 auf die dritte Welle 72 mittels eines Riemens oder Getriebes erfolgen. Es kann auch ein eigener Antrieb (nicht dargestellt) für die dritte Welle 72 vorgesehen sein. Die Welle 72 kann sich hierzu durch die Kurvenscheibe 86 und zentral durch die feststehende Welle, auf der der Träger 12 und die Antriebsscheibe 26 gelagert sind, hindurch erstrecken und in einem dieser Elemente drehbar gelagert sein. Sollten es die Platzverhältnisse und die Anordnung einzelner Komponenten erlauben, ist es auch denkbar, den Exzenter 70 direkt auf der dritten Welle 72 zu lagern. In jedem Fall sind die Anordnung, Ausrichtung und Antriebsgeschwindigkeit der Gegensaugeranordnung 60 und somit die Bewegungsbahn und Bewegungsgeschwindigkeit der Gegensauger 62 an die Bewegungsbahn und Bewegungsgeschwindigkeit der Faltschachteln 92 anzupassen, wie aus den Fig. 5a-5h und der zugehörigen Beschreibung hervorgeht.

Weiterhin ist das erste Führungselement 78 schwenkbar mit einem zweiten Führungselement 80 verbunden. Das zweite Führungselement 80 steht wiederum mit mindestens einer Linearführung 82, in der dargestellten Ausführungsform mit zwei Linearführungen 82, in Verbindung. Insbesondere ist das zweite Führungselement 80 verschiebbar auf der mindestens einen Linearführung 82 gelagert. Dazu weist das zweite Führungselement 80 mindestens eine Aufnahme auf, die z.B. nutförmig ausgebildet ist, und zur Aufnahme einer schienenförmigen Linearführung 82 dient. Auch hier sind alternative Ausführungsformen von Linearführungen realisierbar. So kann z.B. auch das zweite Führungselement 80 einen oder mehrere Fortsätze aufweisen, die in einer Nut verlaufen, die z.B. in der Kurvenscheibe 86 ausgebildet ist.

Das erste Führungselement 78 koppelt somit die Drehbewegung, die durch den Exzenter 70 erzeugt wird, mit einer linearen Bewegung, die die Linearführung des zweiten Führungselements 80 erzwingt. Dadurch bewegt sich der mindestens eine Gegensauger 62 auf einer gewünschten zweiten Bewegungsbahn 620, vorzugsweise einer elliptischen Bewegungsbahn 620. Die Gegensauger 62 können dabei kontinuierlich oder schwellend entlang der zweiten Bewegungsbahn 620 bewegt werden, können aber auch in einer Warteposition verharren, bis sie erneut in den Auffaltbereich bewegt werden.

Zur Umsetzung der erfindungsgemäßen Lehre kann der mindestens eine Gegensauger 62 allerdings auch stationär angeordnet sein, wobei die erste Bewegungsbahn 320 des Saugers 32 und der Faltschachtel 92 entsprechend anzupassen ist, so dass sich die Faltschachtel 92 allmählich dem mindestens einen Gegensauger 62 annähert und, nachdem der Gegensauger 62 die Faltschachtel 92 angesaugt hat, allmählich von dieser entfernt. Ebenso ist eine rein rotierende oder schwellende Bewegung der Gegensauger 62 denkbar, wobei die Gegensauger 62 in diesem Fall auf einer Kreisbahn umlaufend oder auf einem Teilabschnitt einer Kreisbahn hin- und herschwenkend bewegt werden.

In Fig. 5a-5h ist der Bewegungsablauf der wesentlichen Komponenten der Vorrichtung 10 während eines Übergabezyklus anhand einer schematischen Ansicht nach Fig. 1 dargestellt. Insbesondere sind die erste Bewegungsbahn 320 des Saugers 32, die zweite Bewegungsbahn 620 des Gegensaugers 62 und die dritte Bewegungsbahn 350 der zweiten Drehachse 34 angedeutet. Die erste und die zweite Bewegungsbahn 320, 620 entsprechen jeweils der Projektion eines Mittelpunkts der ersten bzw. zweiten Saugfläche 36, 66 während einer Umdrehung des Saugers 32 bzw. Gegensaugers 62 um die stationäre erste Drehachse 14. Die dritte Bewegungsbahn 350 entspricht der Projektion der zweiten Drehachse 34 während einer Umdrehung der zweiten Drehachse 34 um die stationäre erste Drehachse 14.

Ebenso ergeben sich aus den Fig. 5a-5h die einzelnen Verfahrensschritte des Verfahrens zum Übergeben von Faltschachteln 92 an eine Fördervorrichtung 100. Der Pfeil F deutet dabei die Förderrichtung der Fördervorrichtung 100 an, der Pfeil A die Richtung der Drehbewegung des Saugers 32 bzw. der Saugeranordnung 30 um die zweite Drehachse 34 und der Pfeil B die Richtung der Drehbewegung der Saugeranordnung 30 bzw. des Trägers 12 um die stationäre erste Drehachse 14. In dem in Fig. 5a-5h dargestellten Beispiel ist die Drehrichtung A im Uhrzeigersinn und die Drehrichtung B entgegen dem Uhrzeigersinn gerichtet. Entsprechend ist die Förderrichtung F in der Zeichenebene von links nach rechts gerichtet. Die Anordnung des Faltschachtelmagazins 90 und der Fördervorrichtung 100 kann ebenso wie die Richtung der einzelnen Bewegungen entsprechend an die vorliegenden Gegebenheiten angepasst werden. Die Anordnung der Faltschachtelbereitstellung, z.B. des Faltschachtelmagazins 90, relativ zur Fördervorrichtung 100 soll nur dadurch beschränkt sein, dass zwischen ihnen ausreichend Raum zum zumindest teilweisen Auffalten der Faltschachteln 92 mittels der Vorrichtung 10 vorgesehen ist.

Die folgende Beschreibung dient der Veranschaulichung einer möglichen Umsetzung des erfindungsgemäßen Verfahrens bzw. der Funktion der erfindungsgemäßen Vorrichtung 10.

Fig. 5a zeigt den Beginn eines Bewegungszyklus. Der Sauger 32 liegt dabei mit der ersten Saugfläche 36 an der ersten von mehreren im Faltschachtelmagazin 90 bereitgestellten Faltschachteln 92 an. Durch Unterdruck oder Vakuum wird eine Saugkraft erzeugt, die eine kraftschlüssige Verbindung zwischen dem Sauger 32 und der Faltschachtel 92 bewirkt. Der Gegensauger 62 befindet sich zu diesem Zeitpunkt in einer Warteposition oder bewegt sich in einem Wartebereich, in dem er nicht mit der zu bewegenden Faltschachtel 92 kollidieren kann.

Wie in Fig. 5b zu sehen ist, bewegen sich der Träger 12 und die Saugeranordnung 30 gegen den Uhrzeigersinn (Pfeil B) um die stationäre erste Drehachse 14. Dabei dreht sich zumindest der Sauger 32 zugleich um die zweite Drehachse 34 im Uhrzeigersinn (Pfeil A). Die Faltschachtel 92 wird aus dem Faltschachtelmagazin 90 entnommen und von dem Sauger 32 auf der ersten Bewegungsbahn 320 entlanggeführt. Es versteht sich, dass dabei nicht die gesamte Faltschachtel 92 auf der angedeuteten Bewegungsbahn 320 bewegt wird, sondern die Faltschachtel 92 aufgrund der Verbindung mit dem Sauger 32 dessen erster Bewegungsbahn 320 entsprechend folgt. Durch die Überlagerung der Drehbewegung der Saugeranordnung 30 um die erste Drehachse 14 und der Drehbewegung der Saugeranordnung 30 bzw. des Saugers 32 um die zweite Drehachse 34 wird die Faltschachtel 92 relativ zur dritten Bewegungsbahn 350 und bezüglich der stationären ersten Drehachse 14 nach innen geschwenkt. Der Gegensauger 62 hat sich entsprechend so lange in einem Wartebereich oder in einer Warteposition zu befinden, bis die Faltschachtel 92 so weit geschwenkt ist, dass die voraneilende Kante der Faltschachtel 92 nicht mit dem Gegensauger 62 kollidieren kann. Ein Stillstehen des Gegensaugers 62 ist nicht zwingend erforderlich, ein schwellender Betrieb ist ebenso denkbar wie eine konstante Bewegung des Gegensaugers 62, die mit der Bewegung der Faltschachtel 92 abgestimmt ist. Der Hebel 50 befindet sich in der Ausgangsstellung, in der er keinen Kontakt zur Faltschachtel 92 hat.

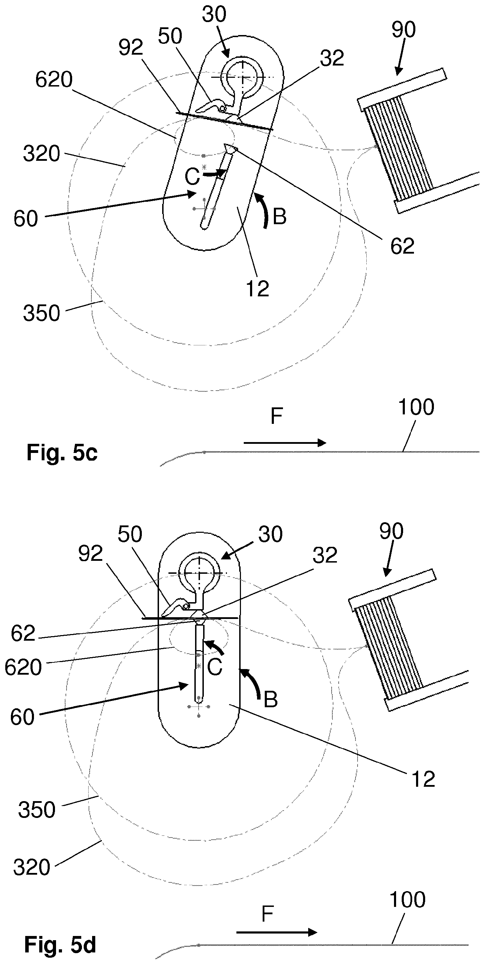

Der Sauger 32 bzw. die Saugeranordnung 30 dreht so lange weiter um die zweite Drehachse 34, bis der Sauger 32 bezüglich der dritten Bewegungsbahn 350 nach innen ausgerichtet ist. Wie den Fig. 5c-5f zu entnehmen ist, wird der Sauger 32 in eine Position gedreht, in der eine Längsachse des Saugers 32 senkrecht zu seiner ersten Saugfläche 36 im Wesentlichen radial zur vorzugsweise kreisförmigen dritten Bewegungsbahn 350 ausgerichtet ist. In dieser Position verbleibt der Sauger 32 zunächst. Eine Drehbewegung der Saugeranordnung 30 um die zweite Drehachse 34 findet entsprechend im Auffaltbereich nicht statt. Es ist aber auch möglich, dass die Saugeranordnung 30 stets auf geeignete Weise um die zweite Drehachse 34 bewegt wird.

Wie in Fig. 5c zu sehen ist, bewegt sich der Gegensauger 62 auf einer zweiten Bewegungsbahn 620 auf die Faltschachtel 92 derart zu (Pfeil C), dass eine Kollision der vorauseilenden Kante der Faltschachtel 92 mit dem Gegensauger 62 ausgeschlossen ist. Im dargestellten Beispiel bewegt sich der Gegensauger 62 auf einer elliptischen zweiten Bewegungsbahn 620. Die Bewegungsabläufe des Saugers 32 und des Gegensaugers 62 sind derart aufeinander abgestimmt, dass sich die erste Bewegungsbahn 320 und die zweite Bewegungsbahn 620 allmählich aneinander annähern. Vorzugsweise tangieren sie sich. Die erste Bewegungsbahn 320 und die zweite Bewegungsbahn 620 nähern sich so lange aneinander an, bis sowohl der Sauger 32 als auch der Gegensauger 62 jeweils mit ihrer Saugfläche 36, 66 an der Faltschachtel 92 anliegen. Sobald die zweite Saugfläche 66 des Gegensaugers 62 nahe genug an die Faltschachtel 92 heran bewegt ist, saugt auch der Gegensauger 62 die Faltschachtel 92 an und stellt eine kraftschlüssige Verbindung zwischen der Faltschachtel 92 und der zweiten Saugfläche 66 her. Ab dieser Stelle im Bewegungsablauf des Saugers 32 und des Gegensaugers 62 beginnt der Auffaltbereich.

Zumindest einer von Sauger 32 und Gegensauger 62 ist im Bereich der ersten bzw. zweiten Saugfläche 36, 66 aus einem elastischen Material gebildet oder dieser Bereich, z.B. in Form eines Saugkopfes, der die Saugfläche 36, 66 umfasst, ist federnd gelagert. Auf diese Weise wird ein vollständiges Anliegen der ersten und der zweiten Saugfläche 36, 66 an der Faltschachtel 92 gewährleistet, ohne dass es zur Stauchung der Sauger- oder Gegensaugeranordnung 30, 60 kommt, wenn der Gegensauger 62 auf die Faltschachtel 92 trifft.

In Fig. 5d ist zu sehen, dass sowohl der Sauger 32 als auch der Gegensauger 62 mit der Faltschachtel 92 in Verbindung stehen und der Sauger 32 und der Gegensauger 62 im Wesentlichen zueinander ausgerichtet sind. Genauer sind in diesem Zustand die erste Saugfläche 36 und die zweite Saugfläche 66 im Wesentlichen parallel und in einem Abstand zueinander angeordnet, der im Wesentlichen der Dicke der zusammengefalteten Faltschachtel 92 entspricht. Der Sauger 32 und der Gegensauger 62 liegen jeweils mit ihrer Saugfläche an einer Seitenfläche der Faltschachtel 92 an, die zwei gegenüberliegenden Seitenflächen der aufgefalteten Faltschachtel entsprechen würden. Bereits in diesem Zustand kann der Hebel 50 aus seiner Ausgangsposition herausgeschwenkt werden, so dass er an der Faltschachtel 92 anliegt.

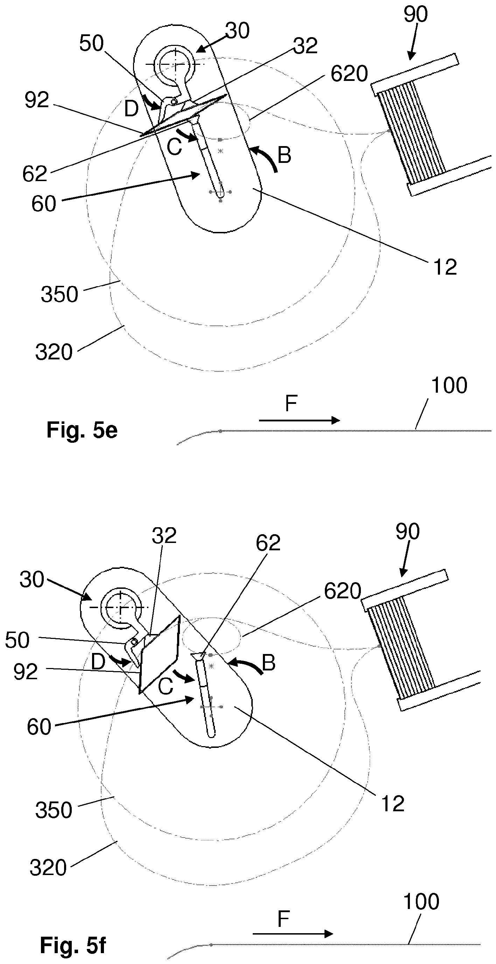

Im weiteren Bewegungsverlauf (Fig. 5e) entfernen sich die erste Bewegungsbahn 320 und die zweite Bewegungsbahn 620 im Auffaltbereich allmählich voneinander. Der Abstand zwischen dem Sauger 32 und dem Gegensauger 62 nimmt dadurch zu. Aufgrund der kraftschlüssigen Verbindung zwischen dem Sauger 32 bzw. dem Gegensauger 62 und der Faltschachtel 92 wird diese auseinandergezogen bzw. aufgefaltet. Spätestens zu diesem Zeitpunkt kann die Schwenkbewegung des Hebels 50 um die vierte Drehachse 54 (Pfeil D) einsetzen.

Wie den Figuren zu entnehmen ist, ist der Gegensauger 62 zumindest im Auffaltbereich bezüglich der stationären ersten Drehachse 14 radial innerhalb des Saugers 32 angeordnet. Es ist besonders bevorzugt, dass die zweite Bewegungsbahn 620 des Gegensaugers 62 vollständig innerhalb der ersten Bewegungsbahn 320 des Saugers 32 angeordnet ist.

Der Hebel 50 unterstützt das Auffalten der Faltschachtel 92, wobei zumindest ein Kontaktbereich des Hebels 50 an einer Seitenfläche der Faltschachtel 92 anliegt, die zwischen den Seitenflächen angeordnet ist, die mit dem Sauger 32 und dem Gegensauger 62 in Verbindung stehen. Der Hebel 50 verhindert dadurch, dass die Faltschachtel 92 wieder zurüccklappen kann und reduziert die notwendige Saugkraft, die zum zuverlässigen Ansaugen der Faltschachtel 92 während des Auseinanderziehens benötigt wird. Der Hebel 50 kann die Faltschachtel 92 im Folgenden in einer gewünschten Stellung halten und einem unter Umständen wirkenden Rückstellmoment entgegenwirken. Der Hebel 50 kann auch weiter geschwenkt werden (Pfeil D), um die Faltschachtel 92 zu überbrechen. Wie in Fig. 5f zu sehen ist, ist der Innenwinkel zwischen der Seitenfläche der Faltschachtel 92, die mit dem Sauger 32 in Verbindung steht, und der Seitenfläche, die mit dem Hebel 50 in Verbindung steht, zunächst größer als 90°. Durch das Überbrechen wird dieser Innenwinkel auf einen Winkel kleiner 90° reduziert. Dies hat zur Folge, dass die Rückstellmomente, die insbesondere in den Faltstellen zwischen den Seitenflächen der Faltschachtel 92 wirken, egalisiert werden. Das vollständige Aufrichten und/oder Überbrechen der Faltschachtel 92 kann alternativ auch durch das Anschlagen derselben an eine feststehende Kulisse der Vorrichtung 10 oder an ein Element der Fördervorrichtung 100 erfolgen.

Sobald die Faltschachtel 92 bis zu einem gewünschten Grad aufgerichtet ist, wird der Unterdruck bzw. das Vakuum im Gegensauger 62 abgebaut. Der Gegensauger 62 löst sich von der Faltschachtel 92. Dies ist in Fig. 5f dargestellt. Die Gegensaugeranordnung 60 kann sich nun wieder in den Wartebereich oder in die Warteposition bewegen. Falls eine Mehrzahl von Saugeranordnungen 30 vorgesehen ist, kann sich die Gegensaugeranordnung 60 auch direkt an die nachfolgende Faltschachtel 92 annähern.

Die Saugeranordnung 30 kann die Faltschachtel 92 relativ zur dritten Bewegungsbahn 350 nach außen schwenken. Vorzugsweise erfolgt dies erst, wenn sich der Gegensauger 62 von der Faltschachtel 92 gelöst hat. Die Saugeranordnung 30 dreht sich um die zweite Drehachse 34, bis die Ausrichtung der Faltschachtel 92 zur Übergabe der Faltschachtel 92 an die Fördervorrichtung 100 geeignet ist.

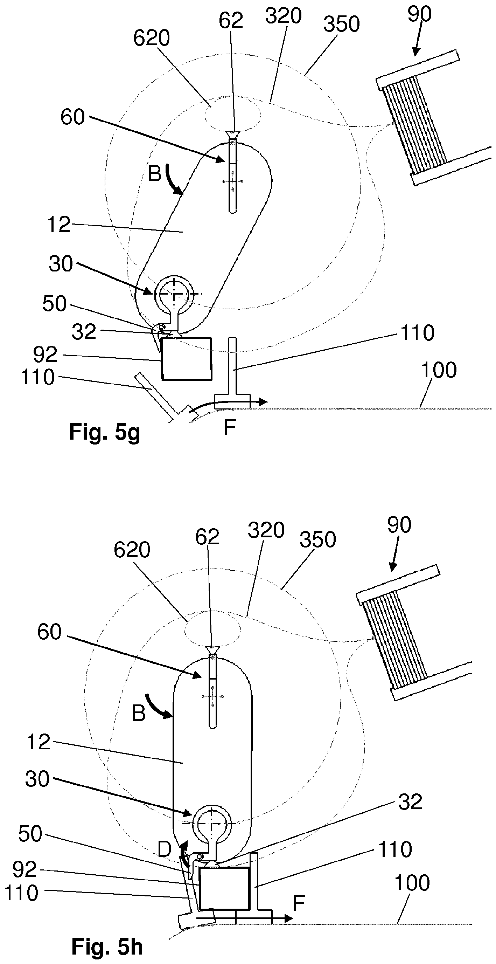

Im dargestellten Ausführungsbeispiel (Fig. 5g) umfasst die Fördervorrichtung 100 beispielsweise mehrere Schlitten 110, die in Förderrichtung F in der Fördervorrichtung 100 bewegt werden. Vorzugsweise wird die Faltschachtel 92 in einem vollständig aufgefalteten Zustand (Innenwinkel zwischen den Seitenflächen beträgt 90°) an die Fördervorrichtung 100 übergeben. Zur möglichst schonenden Übergabe erfolgt diese Übergabe kontinuierlich. Vorzugsweise entspricht während der Übergabe die translatorische Geschwindigkeitskomponente der Faltschachtel 92 in der Vorrichtung 10 der Geschwindigkeit, mit der die Faltschachtel 92 in der Fördervorrichtung 100 weiterbewegt wird. Sobald die Faltschachtel 92 von Fördermitteln der Fördervorrichtung 100, z.B. den Schlitten 110, aufgenommen ist (Fig. 5h), wird der Hebel 50 von der Faltschachtel 92 weg und zurück in seine Ausgangsposition geschwenkt. Der Unterdruck bzw. das Vakuum im Sauger 32 wird abgebaut und der Sauger 32 löst sich von der Faltschachtel 92. Vorzugsweise ist die Faltschachtel 92 zumindest kurzzeitig sowohl in Kontakt mit der Vorrichtung 10 als auch mit der Fördervorrichtung 100. Schließlich wird der Sauger 32 entlang der ersten Bewegungsbahn 320 in die Anfangsposition zurückbewegt, in der er eine neue Faltschachtel 92, z.B. aus dem Faltschachtelmagazin 90, aufnehmen kann.

Wie in den Fig. 5a-5h zu sehen ist, weist die erste Bewegungsbahn 320 lediglich eine Zykloidenspitze an der Stelle auf, an der der Sauger 32 in Verbindung mit der Faltschachtel 92 im Faltschachtelmagazin 90 gebracht wird. Im Übrigen wird die Faltschachtel 92 entlang der Bewegungsbahn 320 bewegt, ohne weitere Zykloidenspitzen zu durchlaufen, wodurch hohe Belastungen auf die Faltschachtel 92 durch hohe Beschleunigungen in derartigen Zykloidenspitzen reduziert bzw. vermieden werden können. Vorzugsweise wird die Faltschachtel 92 kontinuierlich durch die Vorrichtung 10 bewegt. Hierzu bewegen sich der Träger 12 und/oder die Saugeranordnung 30 vorzugsweise kontinuierlich und noch mehr bevorzugt mit konstanter Geschwindigkeit um die stationäre erste Drehachse 14. Es ist aber auch denkbar, dass der Träger 12 und/oder die Saugeranordnung 30 eine schwellende Bewegung um die erste Drehachse 14 ausführen, um kritische Prozesse zu verlangsamen, ohne die Maschinengeschwindigkeit wesentlich zu beeinflussen. Es ist weiter bevorzugt, dass die erste, zweite und dritte Bewegungsbahn 320, 350, 620 jeweils eine geschlossen Kurve bilden. Die dritte Bewegungsbahn 350 ist vorzugsweise kreisförmig.

## Patentansprüche

1. Vorrichtung (10) zum Übergeben von Faltschachteln (92) mit
einer stationären ersten Drehachse (14);
mindestens einer Saugeranordnung (30), die mindestens einen Sauger (32) umfasst und die dazu eingerichtet ist, eine Faltschachtel (92) entlang einer ersten Bewegungsbahn (320) durch die Vorrichtung (10) zu transportieren, wobei die mindestens eine Saugeranordnung (30) um die erste Drehachse (14) drehbar gelagert ist und zumindest der Sauger (32) um eine nicht stationäre zweite Drehachse (34) drehbar gelagert ist;
einer Gegensaugeranordnung (60), die mindestens einen Gegensauger (62) umfasst, wobei der mindestens eine Sauger (32) und der mindestens eine Gegensauger (62) in einem Auffaltbereich derart zusammenwirken, dass sie die Faltschachtel (92) zumindest teilweise auffalten;
**dadurch gekennzeichnet, dass**
der mindestens eine Gegensauger (62) zumindest im Auffaltbereich bezüglich der stationären ersten Drehachse (14) radial innerhalb des mindestens einen Saugers (32) angeordnet ist.

2. Vorrichtung (10) nach Anspruch 1, **dadurch gekennzeichnet, dass** die Gegensaugeranordnung (60) um eine dritte Drehachse (64) drehbar gelagert ist.

3. Vorrichtung (10) nach Anspruch 2, **dadurch gekennzeichnet, dass** die Gegensaugeranordnung (60) derart exzentrisch um die dritte Drehachse (64) gelagert ist, dass der mindestens eine Gegensauger (62) während einer Umdrehung der Gegensaugeranordnung (60) um die dritte Drehachse (64) eine im Wesentlichen elliptische zweite Bewegungsbahn (620) beschreibt.

4. Vorrichtung (10) nach einem der vorangehenden Ansprüche, **dadurch gekennzeichnet, dass** die Gegensaugeranordnung (60) zusätzlich mindestens eine Linearführung (82) umfasst.

5. Vorrichtung (10) nach einem der vorangehenden Ansprüche, **dadurch gekennzeichnet, dass** eine erste Saugfläche (36) des Saugers (32) und eine zweite Saugfläche (66) des Gegensaugers (62) im Auffaltbereich im Wesentlichen zueinander ausgerichtet sind und einander gegenüber liegen.

6. Vorrichtung (10) nach einem der vorangehenden Ansprüche, **dadurch gekennzeichnet, dass** die mindestens eine Saugeranordnung (30) derart gelagert ist, dass die zweite Drehachse (34) während einer Umdrehung um die stationäre erste Drehachse (14) eine kreisförmige dritte Bewegungsbahn (350) beschreibt.

7. Vorrichtung (10) nach einem der vorangehenden Ansprüche, **dadurch gekennzeichnet, dass** die mindestens eine Saugeranordnung (30) mindestens einen Hebel (50) umfasst, der neben dem mindestens einen Sauger (32) angeordnet ist und der um eine vierte Drehachse (54) schwenkbar gelagert ist.

8. Vorrichtung (10) nach Anspruch 7, **dadurch gekennzeichnet, dass** der mindestens eine Hebel (50) zwischen einer Ausgangsposition und einer Endposition schwenkbar gelagert ist, wobei der Hebel (50) in der Ausgangsposition derart angeordnet ist, dass er eine Ebene, die durch die erste Saugfläche (36) definiert ist, nicht schneidet, und in der Endposition derart angeordnet ist, dass er diese Ebene schneidet.

9. Vorrichtung (10) nach Anspruch 2, **dadurch gekennzeichnet, dass** die erste, die zweite und die dritte Drehachse (14, 34, 64) parallel zueinander, insbesondere horizontal, ausgerichtet sind.

10. Verfahren zum Übergeben von Faltschachteln (92) an eine Fördervorrichtung (100) durch eine Übergabevorrichtung (10) mit den Schritten:
- Bereitstellen der Übergabevorrichtung (10) mit mindestens einem Sauger (32) und mindestens einem Gegensauger (62);
- Bewegen des mindestens einen Saugers (32) an eine zu übergebende Faltschachtel (92);
- Ansaugen der Faltschachtel (92) mit dem mindestens einen Sauger (32) und dadurch Herstellen einer Verbindung zwischen der Faltschachtel (92) und dem Sauger (32);
- gemeinsames Bewegen des mindestens einen Saugers (32) und der Faltschachtel (92) durch die Übergabevorrichtung (10) entlang einer ersten Bewegungsbahn (320) des mindestens einen Saugers (32);
- Annähern des mindestens einen Saugers (32) und der Faltschachtel (92) an den mindestens einen Gegensauger (62), wobei der mindestens eine Gegensauger (62) bezüglich der stationären ersten Drehachse (14) radial innerhalb des Saugers (32) angeordnet ist;
- zeitgleiches Ansaugen der Faltschachtel (92) mit dem mindestens einen Gegensauger (62) und dem mindestens einen Sauger (32) in dem Auffaltbereich;
- Auseinanderbewegen des mindestens einen Saugers (32) und des mindestens einen Gegensaugers (62) während des zeitgleichen Ansaugens im Auffaltbereich derart, dass sie die Faltschachtel (92) zumindest teilweise auffalten;
- Lösen des mindestens einen Gegensaugers (62) von der zumindest teilweise aufgefalteten Faltschachtel (92);
- Übergeben der Faltschachtel (92) von dem mindestens einen Sauger (32) an die Fördervorrichtung (100); und
- Lösen des mindestens einen Saugers (32) von der Faltschachtel (92).

11. Verfahren nach Anspruch 10, **dadurch gekennzeichnet, dass** sich der mindestens eine Gegensauger (62) auf einer zweiten Bewegungsbahn (620) bewegt.

12. Verfahren nach Anspruch 10 oder 11, **dadurch gekennzeichnet, dass** die erste und die zweite Bewegungsbahn (320, 620) jeweils eine geschlossene Kurve bilden.

13. Verfahren nach einem der Ansprüche 10 bis 12, **dadurch gekennzeichnet, dass** während des Auffaltens der Faltschachtel (92) im Auffaltbereich eine erste Saugfläche (36) des mindestens einen Saugers (32) und eine zweite Saugfläche (66) des mindestens einen Gegensaugers (62) mit der Faltschachtel (92) in Wirkverbindung stehen.

14. Verfahren nach einem der Ansprüche 10 bis 13, **dadurch gekennzeichnet, dass** die Faltschachtel (92) mittels der Übergabevorrichtung (10) kontinuierlich zur Fördervorrichtung (100) bewegt wird.

## Claims

1. Device (10) for transferring folding boxes (92) with
a stationary first axis of rotation (14);
at least one suction arrangement (30) which comprises at least one suction member (32) and which is set up to transport a folding box (92) along a first movement track (320) through the device (10), wherein the at least one suction arrangement (30) is mounted for rotation about the first axis of rotation (14) and at least the suction member (32) is mounted for rotation about a non-stationary second axis of rotation (34);
a counter suction arrangement (60) which comprises at least one counter suction member (62) wherein the at least one suction member (32) and the at least one counter suction member (62) interact in an unfolding region in such a way that they unfold the folding box (92) at least in part;
**characterised in that**
the at least one counter suction member (62) is arranged at least in the unfolding region radially inside the at least one suction member (32) in relation to the stationary first axis of rotation (14).

2. Device (10) according to claim 1 **characterised in that** the counter suction arrangement (60) is mounted for rotation about a third axis of rotation (64).

3. Device (10) according to claim 2, **characterised in that** the counter suction arrangement (60) is mounted eccentrically around the third axis of rotation (64) in such a way that the at least one counter suction member (62) describes a substantially elliptical second movement track (620) during rotation of the counter suction arrangement (60) about the third axis of rotation (64).

4. Device (10) according to one of the preceding claims **characterised in that** the counter suction arrangement (60) further comprises at least one linear guide (82).

5. Device (10) according to one of the preceding claims **characterised in that** a first suction surface (36) of the suction member (32) and a second suction surface (66) of the counter suction member (62) are aligned substantially towards one another and lie opposite one another in the unfolding region.

6. Device (10) according to one of the preceding claims **characterised in that** the at least one suction arrangement (30) is mounted such that the second axis of rotation (34) describes a circular third movement track (350) during rotation about the stationary first axis of rotation (14).

7. Device (10) according to one of the preceding claims **characterised in that** the at least one suction arrangement (30) comprises at least one lever (50) which is arranged next to at least one suction member (32) and which is mounted to pivot about a fourth axis of rotation (54).

8. Device (10) according to claim 7 **characterised in that** the at least one lever (50) is mounted to pivot between a starting position and an end position, wherein the lever (50) is arranged in the starting position such that it does not intersect a plane which is defined by the first suction surface (36), and is arranged in the end position such that it does intersect this plane.

9. Device (10) according to claim 2 **characterised in that** the first, the second, and the third axes of rotation (14, 34, 64) are aligned parallel to one another, in particular horizontally.

10. Method for transferring folding boxes (92) to a conveyor device (100) through a transferring device (10), with the steps of:
- providing the transferring device (10) having at least one suction member (32) and at least one counter suction member (62);
- moving the at least one suction member (32) up to a folding box (92) which is to be transferred;
- drawing in the folding box (92) with the at least one suction member (32) and thereby producing a connection between the folding box (92) and the suction member (32);
- jointly moving the at least one suction member (32) and the folding box (92) through the transferring device (10) along a first movement track (320) of the at least one suction member (32);
- moving the at least one suction member (32) and the folding box (92) close to the at least one counter suction member (62), wherein the at least one counter suction member (62) is arranged radially inside the suction member (32) in relation to the stationary first axis of rotation (14);
- simultaneously drawing the folding box (92) with the at least one counter suction member (62) and the at least one suction member (32) in the unfolding region;
- moving apart the at least one suction member (32) and the at least one counter suction member (62) as they draw the folding box (92) simultaneously in the unfolding region so that they unfold the folding box (92) at least in part;
- releasing the at least one counter suction member (62) from the at least partially unfolded folding box (92);
- transferring the folding box (92) from the at least one suction member (32) to the conveying device (100); and
- releasing the at least one suction member (32) from the folding box (92).

11. Method according to claim 10 **characterised in that** the at least one counter suction member (62) is moved on a second movement track (620).

12. Method according to claim 10 or 11 **characterised in that** the first and the second movement tracks (320), 620) each form a closed curve.

13. Method according to one of claims 10 to 12 **characterised in that**, whilst the folding box (92) is unfolded in the unfolding region, a first suction surface (36) of the at least one suction member (32), and a second suction surface (66) of the at least one counter suction member (62) are in active connection with the folding box (92).

14. Method according to one of claims 10 to 13 **characterised in that** the folding box (92) is moved continuously towards the conveying device (100) by means of the transferring device (10).

## Revendications

1. Dispositif (10) pour le transfert de boîtes pliantes (92) comprenant
un premier axe de rotation (14) immobile ;
au moins un agencement d'organe d'aspiration (30), qui comporte au moins un organe d'aspiration (32) et qui est agencé de façon à transporter une boîte pliante (92) le long d'une première trajectoire de déplacement (320) à travers le dispositif (10), le ou chaque agencement d'organe d'aspiration (30) étant monté rotatif autour du premier axe de rotation (14) et le ou chaque organe d'aspiration (32) étant monté rotatif autour d'un deuxième axe de rotation (34) non immobile ;
un agencement d'aspiration opposée (60), qui comporte au moins un organe d'aspiration opposée (62), le ou chaque organe d'aspiration (32) et le ou chaque organe d'aspiration opposée (62) coopérant dans une zone de dépliage de façon telle qu'ils déplient au moins partiellement la boîte pliante (92) ;
**caractérisé en ce que**
le ou chaque organe d'aspiration opposée (62) est disposé radialement vers l'intérieur vis-à-vis du ou de chaque organe d'aspiration (32) par rapport au premier axe de rotation (14) immobile, au moins dans la zone de dépliage.

2. Dispositif (10) suivant la revendication 1, **caractérisé en ce que** l'agencement d'organe d'aspiration opposée (60) est monté rotatif autour d'un troisième axe de rotation (64).

3. Dispositif (10) suivant la revendication 2, **caractérisé en ce que** l'agencement d'organe d'aspiration opposée (60) est monté de manière excentrée autour du troisième axe de rotation (64) de façon telle que, pendant une révolution de l'agencement d'organe d'aspiration opposée (60) autour du troisième axe de rotation (64), le ou chaque organe d'aspiration opposée (62) décrit une deuxième trajectoire de déplacement (620) essentiellement elliptique.

4. Dispositif (10) suivant l'une des revendications précédentes, **caractérisé en ce que** l'agencement d'organe d'aspiration opposée (60) comporte en outre au moins un guidage rectiligne (82).

5. Dispositif (10) suivant l'une des revendications précédentes, **caractérisé en ce qu'**une première surface d'aspiration (36) de l'organe d'aspiration (32) et une seconde surface d'aspiration (66) de l'organe d'aspiration opposée (62) sont orientées essentiellement l'une vis-à-vis de l'autre et se font face, dans la zone de dépliage.

6. Dispositif (10) suivant l'une des revendications précédentes, **caractérisé en ce que** le ou chaque agencement d'organe d'aspiration (30) est monté de façon telle que, pendant une révolution autour du premier axe de rotation (14) immobile, le deuxième axe de rotation (34) décrit une troisième trajectoire de déplacement (350) circulaire.

7. Dispositif (10) suivant l'une des revendications précédentes, **caractérisé en ce que** le ou chaque agencement d'organe d'aspiration (30) comporte au moins un levier (50) qui est disposé à côté du ou de chaque organe d'aspiration (32) et qui est monté basculant autour d'un quatrième axe de rotation (54).

8. Dispositif (10) suivant la revendication 7, **caractérisé en ce que** le ou chaque levier (50) est monté basculant entre une position initiale et une position finale, le levier (50) étant disposé dans la position initiale de façon à ne pas couper un plan qui est défini en passant par la première surface d'aspiration (36) et étant disposé dans la position finale de façon à couper ce plan.

9. Dispositif (10) suivant la revendication 2, **caractérisé en ce que** le premier, le deuxième et le troisième axes de rotation (14, 34, 64) sont orientés parallèlement les uns aux autres, notamment horizontalement.

10. Procédé pour le transfert de boîtes pliantes (92) à un dispositif de transport (100) à travers un dispositif de transfert (10), comportant les opérations consistant :
- à équiper le dispositif de transfert (10) d'au moins un organe d'aspiration (32) et d'au moins un organe d'aspiration opposée (62) ;
- à déplacer le ou chaque organe d'aspiration (32) vers une boîte pliante (92) à transférer ;
- à maintenir par aspiration la boîte pliante (92) à l'aide du ou de chaque organe d'aspiration (32) et à produire ainsi une solidarisation entre la boîte pliante (92) et l'organe d'aspiration (32) ;
- à déplacer en commun le ou chaque organe d'aspiration (32) et la boîte pliante (92) à travers le dispositif de transfert (10) le long d'une première trajectoire de déplacement (320) du ou de chaque organe d'aspiration (32) ;
- à rapprocher le ou chaque organe d'aspiration (32) et la boîte pliante (92) du ou de chaque organe d'aspiration opposée (62), le ou chaque organe d'aspiration opposée (62) étant disposé radialement vers l'intérieur vis-à-vis de l'organe d'aspiration (32) par rapport au premier axe de rotation (14) immobile ;
- à maintenir par aspiration simultanément la boîte pliante (92) au moyen du ou de chaque organe d'aspiration opposée (62) et du ou de chaque organe d'aspiration (32), dans la zone de dépliage ;
- à éloigner l'un de l'autre le ou chaque organe d'aspiration (32) et le ou chaque organe d'aspiration opposée (62) pendant le maintien par aspiration simultané dans la zone de dépliage de façon telle qu'ils déplient au moins partiellement la boîte pliante (92) ;
- à séparer le ou chaque organe d'aspiration opposée (62) de la boîte pliante (92) au moins partiellement dépliée ;
- à transférer la boîte pliante (92) du ou de chaque organe d'aspiration (32) au dispositif de transport (100) ; et
- à séparer le ou chaque organe d'aspiration (32) de la boîte pliante (92).

11. Procédé suivant la revendication 10, **caractérisé en ce que** le ou chaque organe d'aspiration opposée (62) se déplace sur une deuxième trajectoire de déplacement (620).

12. Procédé suivant la revendication 10 ou 11, **caractérisé en ce que** la première et la deuxième trajectoires de déplacement (320, 620) forment chacune respectivement une courbe fermée.

13. Procédé suivant l'une des revendications 10 à 12, **caractérisé en ce que**, pendant le dépliage de la boîte pliante (92) dans la zone de dépliage, une première surface d'aspiration (36) du ou de chaque organe d'aspiration (32) et une seconde surface d'aspiration (66) du ou de chaque organe d'aspiration opposée (62) se trouvent en coopération active avec la boîte pliante (92).

14. Procédé suivant l'une des revendications 10 à 13, **caractérisé en ce que** la boîte pliante (92) est déplacée au moyen du dispositif de transfert (10) d'une manière continue vers le dispositif de transport (100).
